# FASCICULE DE BREVET EUROPEEN

(11) **EP 0 957 545 B1**
(45) Date de publication et mention de la délivrance du brevet: **11.08.2004**
(21) Numéro de dépôt: 99401043.7
(22) Date de dépôt: 29.04.1999
(51) Int. Cl.: H01S 3/06, C03C 13/04

(54) **Fibre optique pour amplificateur optique à gain plat**
Optische Faser für optischen Verstärker mit gleichmässiger Verstärkung
Optical fiber for flat gain optical amplifier

(30) Priorité: 14.05.1998 FR 9806082
(43) Date de publication de la demande: 17.11.1999
(73) Titulaire: ALCATEL, 75008 Paris (FR)
(72) Inventeur: Gasca, Laurent, 91400 Orsay (FR); Desthieux, Bertrand, 75014 Paris (FR); Sinet, Christophe, 92260 Fontenay aux Roses (FR); Le Sergent, Christian, 91460 Marcoussis (FR)
(74) Mandataire: Lamoureux, Bernard

(56) Documents cités:
- EP-A- 0 490 881
- EP-A- 0 565 439
- EP-A- 0 654 872
- FR-A- 2 740 563
- DESTHIEUX B M ET AL: "SPECTRAL BANDWIDTH BROADENING FOR LONG-HAUL SUBMARINE WDM APPLICATIONS USING PHOSPHORUS-ALUMINIUM-CODOPED EDFAS" ELECTRONICS LETTERS, vol. 32, no. 24, 21 novembre 1996 (1996-11-21), pages 2214-2216, XP000683711

## Description

La présente invention concerne une fibre optique comprenant au moins un dopant fluorescent, ainsi que son procédé de fabrication; en particulier, elle concerne une fibre optique à dopant fluorescent, pour amplificateur optique à gain plat, ainsi qu'un amplificateur comprenant une telle fibre.

Une telle fibre optique est notamment adaptée pour la réalisation d'amplificateurs pour des systèmes de transmissions sous-marins en multiplexage de longueurs d'ondes. Les systèmes de transmissions par fibres optiques, et notamment les systèmes sous-marins, utilisent à intervalles régulier des dispositifs d'amplification, formée de fibre dopée avec une terre rare comme l'erbium, et d'une pompe. Dans le cas spécifique des transmissions en multiplexage de longueurs d'onde, ces dispositifs d'amplification devraient présenter une bande au moins égale à celle du multiplex de longueurs d'ondes, et un pic de gain aussi plat que possible centré sur la bande du multiplex.

Ces caractéristiques peuvent être obtenues par ajout de filtres, par exemple de réseaux de Bragg, comme décrit dans O. Gautheron, P. Sansonnetti, G. Bassier et I. Riant, Optical gain equalisation with short period fiber gratings, ECOC'97 pages 131-134, 1997, ou encore dans N. Bergano et al., 100 Gb/s WDM transmission of twenty 5 Gb/s NRZ data channels over transoceanic distances using a gain flattened amplifier chain, ECOC'95 pages 967-970, 1995. Il serait toutefois avantageux d'obtenir ces caractéristiques grâce à la fibre d'amplification elle-même.

Il a déjà été proposé, à cet effet, d'associer dans l'amplificateur, deux sections de fibres différentes montées l'une après l'autre. C.R Giles et D. DiGiovanni, Dynamic Equalization in Two-Stage Amplifiers, OAA'90, MD2, p.48-51 propose de corriger les variations relatives de gains entre les canaux d'un multiplex en longueur d'onde grâce à un amplificateur à deux étages, dans lequel les deux étages présentent des spectres de gain complémentaires. Ce document propose un premier étage formé d'une fibre dopée à l'erbium à coeur germano-alumino-silicate et un deuxième étage formé d'une fibre dopée à l'erbium à coeur alumino-silicate. Un pompage séparé des deux fibres permet d'égaliser le gain sur la plage du multiplex.

T. Kashiwada et autres, Gain-flattened optical-fiber amplifiers with a hybrid Er-doped-fiber configuration for WDM transmission, OFC'95 Technical Digest, TuP1, pp. 77-78 propose un amplificateur à fibre dopée à l'erbium formé d'une section de fibre codopée à l'aluminium (1,4% en poids) cascadée avec une section de fibre codopée à l'aluminium et au phosphore (5% en poids de P et 1% en poids d'Al) . Ce document propose d'utiliser une pompe unique, mais égalise le gain par un choix approprié des longueurs de fibre de chaque sections.

M. Kakui et autres, Low noise, high power optical amplifiers employing an improved hybrid Er-doped fiber configuration for WDM transmission, OAA'96, Technical Digest, SaA3, pp. 203-206 propose un amplificateur à deux étages; le premier étage est formé d'une fibre dopée à l'erbium codopée à l'aluminium; le deuxième étage est formé d'une section de fibre dopée à l'erbium codopée à l'aluminium et au phosphore cascadée avec une section de fibre dopée à l'erbium codopée à l'aluminium. Chaque section est pompée séparément, et le choix des longueurs relatives des fibres permet de sélectionner le niveau de puissance d'entrée pour lequel l'égalisation du gain est maximale.

M. Kakui et autres, Design Optimization of Hybrid Erbium-Doped Fiber Amplifiers for WDM Transmission Systems, Optical Fiber Technology 3 (1997), pp. 123-133 propose de cascader une section de fibre dopée à l'erbium et codopée à l'aluminium et une section de fibre dopée à l'erbium et codopée au phosphore et à l'aluminium; de la même façon, la longueur relative des sections de fibre permet d'égaliser le gain.

P.F. Wysocki et D. DiGiovanni, Dual-Stage Erbium-Doped, Erbium/Ytterbium Codoped Fiber Amplifier with up to +26 dBm Output and 17 nm Flat spectrum, OAA'96, Technical Digest 1996, SaA2, propose un amplificateur avec une première section de fibre dopée à l'erbium et codopée à l'aluminium et une deuxième section de fibre dopée à l'erbium et à l'ytterbium et codopée au phospore. Les deux sections sont pompées indépendamment, et le gain est égalisé par un choix approprié des longueurs respectives des deux sections.

P. Nillson et autres, Simple gain-flattened erbium-doped fiber amplifier with a wide dynamic range OFC'97 Technical Digest, pp. 129-130 propose une première section de fibre dopée à l'erbium et codopée au phosphore, et une deuxième section de fibre dopée à l'erbium et codopée à l'aluminium et au germanium. L'amplificateur résultant présente une platitude de gain sur une dynamique de 15 dB grâce à un choix approprié des codopants et des longueurs de fibre.

Ces solutions présentent l'inconvénient d'augmenter le coût des amplificateurs, du fait de l'existence de différents composants, et de la nécessité d'un assemblage des diverses sections de fibre, le plus souvent avec un isolateur.

Il a aussi été proposé d'utiliser dans la même fibre des codopants tels que l'aluminium et le phosphore. B.J. Ainslie et autres, Erbium doped fibers for efficient optical amplifiers, IEE Proceedings, vol. 137, Pt. J. No 4, August 1990, décrit l'utilisation d'une fibre Al2O3-P2O5-SiO2 dopée à l'erbium pour des amplificateurs optiques. Ce document ne mentionne pas le problème de l'égalisation du gain, et ne suggère aucune solution à ce problème.

B. M. Desthieux et autres, Enhanced spectral gain-response of in-line amplifiers for transoceanic WDM systems using phosporus aluminium codoped EDFAs, OAA'96 Technical Digest, SaA4-1, pp. 207-210 compare une fibre dopée à l'erbium et codopée P2O5-Al2O3 à la fibre codopée Al2O3-GeO2. Ce document est muet quant à la proportion des codopants et quant au positionnement des dopants dans la fibre.

EP-A-0 602 467 décrit une fibre dopée à l'erbium pour un amplificateur à fibre. Le but poursuivi dans ce document est l'augmentation de l'ouverture numérique de la fibre; pour cela, il est proposé de doper le coeur de fibre par Al2O3, GeO2 ou P2O5; il est en outre proposé de prévoir une couche de diminution des contraintes, entre le coeur de fibre et la gaine, de sorte à diminuer les différences entre les coefficients de dilatation thermique. Cette couche peut être dopée avec P2O5 et F2. On peut encore prévoir une couche barrière entre le coeur de fibre et la couche de diminution des contraintes, de sorte à limiter la diffusion du phospore dans le coeur. Ceci limite aussi la diffusion de l'erbium vers la couche de diminution des contraintes.

FR-A-2 740 563 propose une fibre optique en silice, dont le coeur comprend une zone centrale contenant de l'erbium, de l'aluminium et le cas échéant du germanium, une zone intermédiaire peu ou non dopée, et une zone périphérique dopée au germanium ou au phosphore. La zone intermédiaire peu ou non dopée agit comme barrière contre la diffusion de l'erbium vers la zone périphérique.

Ces différents documents ne fournissent pas une solution au problème de l'égalisation de gain des amplificateurs à fibre dopée à l'erbium pour des systèmes de transmission en multiplex de longueur d'onde.

A. Bjarklev, Hybrid Erbium-Doped Fiber for Gain Flattened Operation, Optical Fiber Technology 3 (1997), pp. 72-76 propose une fibre optique dont le coeur (de rayon r2 = a = 1,625m) dopé à l'erbium présente une zone centrale (de rayon r1 = 0,5a) codopée à l'Al et une zone périphérique codopée au Ge, ainsi qu'une seconde fibre optique similaire, mais pour laquelle les codopants ont été placés dans les zones de manière inverse à la première (et avec un rayon r1 = 0,65 a). Cet article souligne la difficulté de fabriquer des fibres dopées à l'erbium présentant deux codopants différents, du fait des microstructures dans lesquelles les ions erbium sont incorporées lors de la fabrication de la fibre.

D.J. Di Giovanni et autres, Structure and properties of silica containing aluminium and phosphorus near the AIPO4 join, J. of Non-Crystalline Solids 113, pp. 58-64, 1989 explique que le mélange d'AI et P dans une matrice de silice conduit à la formation d'AlPO4, qui a pour effet de faire diminuer l'indice de la fibre. Cet article suggère d'associer AI et P pour obtenir des verres avec de nouvelles propriétés.

L'invention a pour but de proposer une fibre optique permettant d'obtenir une égalisation de gain sur un intervalle de longueur d'onde correspondant également au pic de gain. L'invention a encore pour but de proposer une fibre optique présentant un bruit de fond faible, et une puissance de sortie acceptable, qui soit facilement utilisable dans un amplificateur optique à fibre, notamment pour l'amplification de signaux multiplexés en longueurs d'ondes.

Elle assure une amplification adéquate sur la plage de longueurs d'onde,

Plus précisément, l'invention propose une fibre optique présentant un coeur à base de silice avec au moins un dopant fluorescent réparti sur toute la section du coeur, une zone centrale codopée avec un codopant choisi parmi AI et P, et une zone périphérique codopée avec un autre codopant choisi parmi AI et P.

Dans un mode de réalisation, le dopant fluorescent est l'erbium.

Dans un autre mode de réalisation, le codopant de la zone centrale est Al. On peut aussi prévoir que le codopant de la zone centrale est P.

Avantageusement, la proportion d'AI dans le coeur de fibre est comprise entre 1 et 5% en poids; la proportion de P dans le coeur de fibre est de préférence comprise entre 1 et 5% en poids.

Dans un mode de réalisation, les proportions de P et d'AI dans la fibre sont sensiblement égales.

De préférence, la fibre présente une couche barrière entre la zone centrale et la zone périphérique. Cette couche barrière est de préférence peu ou faiblement dopée.

Dans un mode de réalisation, au moins une zone du coeur est codopée par un dopant élévateur d'indice, tel que Ge. La proportion de Ge dans le coeur de fibre est de préférence comprise entre 10 et 25 % en poids.

L'invention concerne aussi l'utilisation du dépôt chimique en phase vapeur modifié pour la fabrication d'une telle fibre optique.

Enfin l'invention concerne un amplificateur à fibre optique comprenant une telle fibre selon l'une des revendications, et des moyens de pompage optique.

D'autres caractéristiques et avantages de l'invention apparaîtront à la lecture de la description qui suit de modes de réalisation de l'invention, donnée à titre d'exemple et en référence aux dessins annexés qui montrent:
- figure 1 la section transversale d'une fibre optique réalisée selon l'invention;
- figure 2 la distribution des codopants dans une fibre optique selon un premier mode de réalisation de l'invention, en fonction du rayon;
- figure 3 la distribution des codopants dans une fibre optique selon un second mode de réalisation de l'invention, en fonction du rayon;
- figure 4 une représentation graphique d'une boucle à recirculation utilisée comme montage de test d'une fibre selon l'invention;
- figure 5 la réponse spectrale d'une fibre optique selon l'invention;
- figure 6 la réponse spectrale d'une fibre optique selon l'invention, à plus grande échelle.

L'invention propose une fibre optique qui assure une bonne égalisation de gain dans une plage de longueur d'ondes correspondant à un multiplex de longueurs d'ondes. Pour cela, l'invention propose de doper le coeur de la fibre par un dopant fluorescent, tel l'erbium, et de codoper la fibre par de l'Al et du P; la fibre est codopée par ces deux éléments dans des zones au moins partiellement distincts de la fibre, par exemple dans la zone centrale du coeur de fibre, et dans la zone périphérique du coeur de fibre.

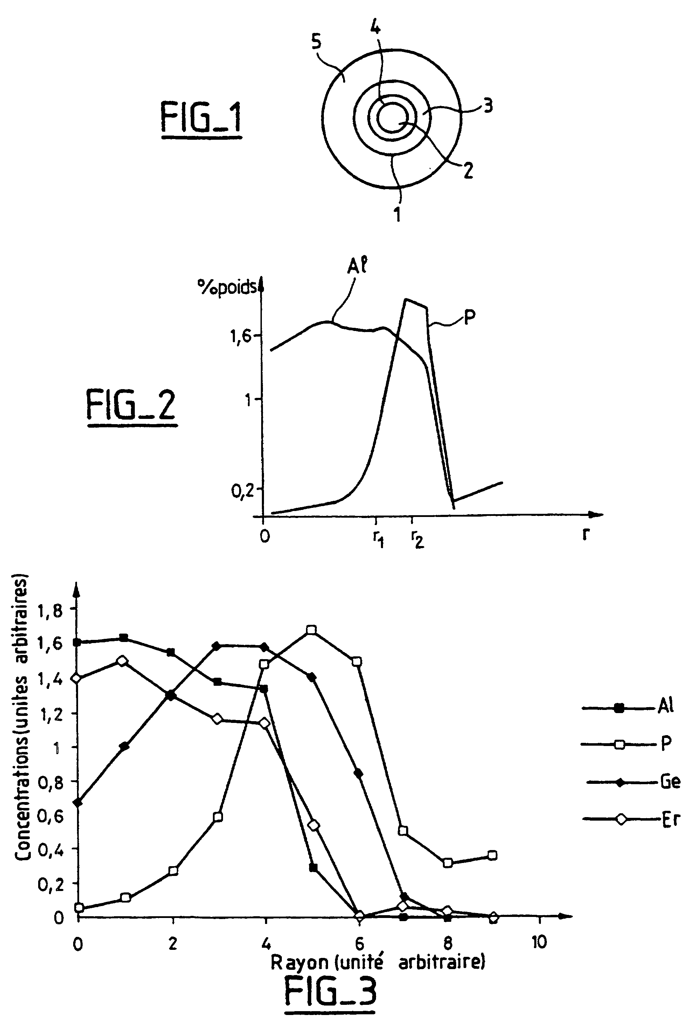

La figure 1 montre la section transversale d'une fibre optique selon l'invention; on a représenté sur la figure le coeur 1 de la fibre, et la gaine 5 de la fibre. La fibre est une fibre de silice dont le coeur est dopé, sensiblement sur son ensemble, par un dopant fluorescent tel que l'erbium; on pourrait aussi sélectionner un autre dopant fluorescent ou ajouter un ou plusieurs dopants fluorescents supplémentaires à l'erbium. La proportion d'erbium dans le coeur de la fibre est choisie dans des plages de 50 ppm à 1000 ppm, qui assurent une bonne efficacité de pompage.

La gaine 5 de la fibre peut être constituée de façon classique par des couches de silice dopées germanium, phosphore et fluor à moins de 1 % massique; d'autres compositions de gaine connues en soi sont possibles.

Dans la zone centrale 2, le coeur de la fibre est codopé par un codopant choisi parmi l'aluminium et le phosphore. La proportion de codopant dans la zone centrale du coeur de la fibre est avantageusement de l'ordre de 1 à 5 % en poids. Dans la zone périphérique 3, le coeur de la fibre est codopé par un codopant choisi parmi l'aluminium et le phosphore. La proportion de codopant dans la zone périphérique du coeur de la fibre est avantageusement de l'ordre de 1 à 5 % en poids. De préférence, les proportions d'aluminium et de phosphore dans le coeur de la fibre sont sensiblement égales. On peut codoper la zone centrale du coeur de fibre par de l'aluminium et la zone périphérique par du phosphore, comme représenté sur la figure 2, ou inversement codoper la zone centrale du coeur de fibre par du phosphore et la zone périphérique par de l'aluminium.

On entent par "zone centrale" du coeur de la fibre la zone du coeur s'étendant au voisinage de l'axe de la fibre; on entend par "zone périphérique" du coeur de la fibre la zone du coeur de la fibre qui se trouve au voisinage de la gaine, radialement vers l'extérieur de la fibre optique.

La zone centrale et la zone périphérique sont susceptibles de se recouvrir partiellement, comme expliqué en référence à la figure 2; il est aussi possible, comme expliqué plus bas de prévoir entre la zone centrale et la zone périphérique, une zone de barrière ou couche barrière 4.

La figure 2 montre une représentation graphique de la distribution des codopants dans une fibre optique selon l'invention, en fonction du rayon. On a porté en abscisses le rayon en unités arbitraires, et en ordonnées la concentration locale des différents dopants, en pourcents en poids. Comme le montre la figure 2, la zone centrale de la fibre, pour des rayons inférieurs à r1, comprend principalement de l'aluminium; dans la zone périphérique, pour des rayons supérieurs à r2, la fibre comprend essentiellement du phospore. Dans la zone entre r1 et r2, la fibre comprend du phospore, de l'aluminium et en outre de l'AlPO4. Typiquement, r2 = 1,4 x r1. La fibre comprend de l'erbium sensiblement sur toute sa section. Dans le mode de réalisation de la figure 2, la zone codopée au phospore et la zone codopée à l'aluminium se recouvrent partiellement.

La formation d'AlPO4 entre la zone périphérique et la zone centrale, ou encore à la frontière entre ces deux zones peut conduire à une diminution d'indice du coeur de fibre. L'invention propose, dans un mode de réalisation, de prévoir en outre un dopage par un dopant élévateur d'indice, au moins dans la zone centrale du coeur de fibre, de sorte à augmenter l'indice du coeur. On peut utiliser du germanium, dans une concentration de l'ordre de 10 à 25 % en poids, de préférence de l'ordre de 15% en poids.

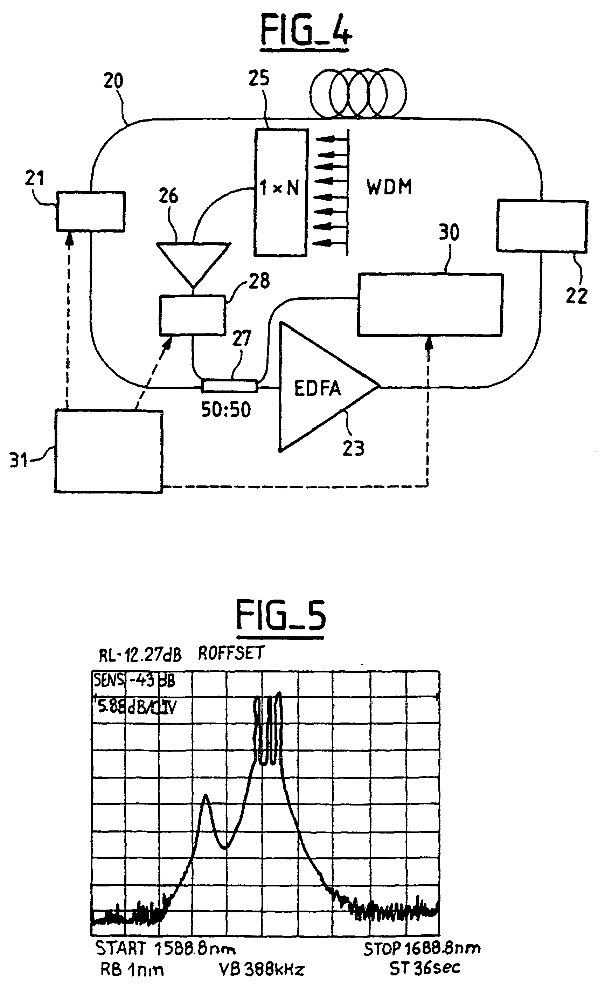

La figure 3 montre, avec les mêmes conventions que la figure 2, la distribution des dopants dans le cas d'un dopage au germanium dans l'ensemble de la fibre. Sur la figure 3, les abscisses présentent un rayon arbitraire et les ordonnées la concentration des dopants en unités arbitraires; pour des raisons de représentation, les unités de concentration diffèrent d'un élément à l'autre. On constate de nouveau sur la figure 3 une zone centrale essentiellement codopée à l'aluminium, et une zone périphérique essentiellement dopée au phosphore. Dans le mode de réalisation de l'invention représenté à la figure 3, on prévoit entre la zone centrale et la zone périphérique une couche barrière, permettant de limiter la diffusion d'AI vers la zone codopée par P. Cette couche barrière est par exemple simplement formée d'une couche de silice peu ou faiblement dopée par AI et P; elle peut être aussi formée d'une couche de silice simplement codopée par Ge, dans la mesure où la fibre est par ailleurs aussi dopée au Ge. La couche barrière présente une épaisseur suffisante pour limiter la diffusion d'AI, par exemple la section de la couche barrière représente environ le tiers de la section totale du coeur.

La figure 4 montre une représentation graphique d'une boucle à recirculation utilisée comme montage de test d'une fibre selon l'invention. Dans le montage de la figure 4, une bobine de fibre de ligne 20, utilisée comme délai temporel, avec un commutateur 21 et un atténuateur 22 est branché aux bornes d'un amplificateur à fibre optique 23, dont la fibre d'amplification est une fibre selon l'invention. Le signal multiplexé en longueur d'ondes, fourni par une source 25 est amplifié par un amplificateur 26 et couplé sur la fibre de ligne par un coupleur 50:50 27; un commutateur 28 permet d'isoler l'amplificateur 26 du coupleur. L'autre extrémité de la fibre du coupleur est reliée à un analyseur de spectre 30. Les commutateurs et l'analyseur de spectre sont commandés par un pilote 31.

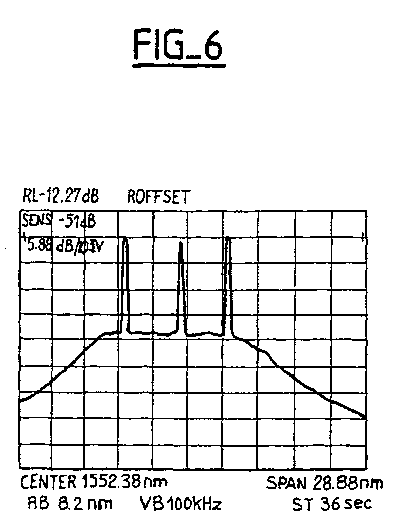

Dans le montage de la figure 4, l'amplificateur comprend une fibre de 28 m, avec un pompage arrière à 1,48 mm. Les pertes en entrée et en sortie de l'amplificateur sont respectivement de 1 et 2 dB. Les pertes de la boucle sont de 15,8 dB. On injecte dans la fibre dopée erbium, pompée avec 27 mW à 1480 nm, 3 signaux à 1548,7, 1552,0 et 1554,6 nm avec une puissance d'entrée totale de -7,5 dBm, l'on obtient les courbes de réponse spectrale des figures 5 et 6 qui correspondent à la sortie après un budget total de 1100 db, soit un parcours équivalent à 5500 km, sur une plage de 100 et 20 nm. L'on peut observer qu'il n'y a pas de différence entre les 3 canaux et le plateau de gain coïncide avec le pic de gain.

On décrit maintenant un mode de fabrication d'une fibre selon l'invention. La fibre optique peut être obtenue par dépôt chimique en phase vapeur modifié (MCVD ou "modified chemical vapor deposition" en langue anglaise). Cette solution assure de bons résultats en termes de pertes de fonds, de différences d'indice de réfraction et de reproductibilité des caractéristiques d'amplification. La fibre est fabriqué en utilisant la technique de MCVD connue en soi. On peut par exemple procéder au nombre de passes suivant :
- zone périphérique du coeur: 2 passes SiCl4 + POCl3 + GeCl4;
- zone barrière : 2 passes SiCl4 + GeCl4;
- zone centrale du coeur : 1 passe SiCl4 + GeCl4, cette passe étant sous-vitrifiéede manière à pouvoir incorporer de l'aluminium et de l'erbium par une technique d'imprégnation (en anglais "solution soaking technique").

Dans cet exemple de réalisation, la zone centrale du coeur est dopée au phosphore, et l'erbium utilisé comme dopant fluorescent est introduit en même temps que l'aluminium lors de la fabrication de la zone centrale. L'erbium diffuse vers la zone centrale du coeur de fibre de sorte à présenter un profil de concentration du type de celui de la figure 3, et à s'étendre effectivement sensiblement sur l'ensemble du coeur de la fibre. En revanche, comme visible sur la figure 3, la concentration en phosphore dans la zone centrale est faible.

Bien entendu, la présente invention n'est pas limitée aux exemples et modes de réalisation décrits et représentés, mais elle est susceptible de nombreuses variantes accessibles à l'homme de l'art.

## Revendications

1. Fibre optique présentant un coeur à base de silice avec au moins un dopant fluorescent réparti sur toute la section du coeur (1), ledit coeur comportant une zone centrale (2) codopée avec un premier codopant choisi parmi Al et P, et une zone périphérique (3) codopée avec un autre codopant choisi parmi Al et P différent du premier, pour obtenir une égalisation de gain sur un intervalle de longueur d'onde correspondant également au pic de gain.

2. Fibre optique selon la revendication 1 **caractérisée en ce qu'**un dopant fluorescent est l'erbium.

3. Fibre optique selon la revendication 1 ou 2, **caractérisée en ce que** le codopant de la zone centrale (2) est Al.

4. Fibre optique selon la revendication 1 ou 2, **caractérisée en ce que** le codopant de la zone centrale (2) est P.

5. Fibre optique selon l'une quelconque des revendications 1 à 4, **caractérisée en ce que** la proportion d'AI dans le coeur de fibre est comprise entre 1 et 5% en poids.

6. Fibre optique selon l'une quelconque des revendications 1 à 5, **caractérisée en ce que** la proportion de P dans le coeur de fibre est comprise entre 1 et 5% en poids.

7. Fibre optique selon l'une des revendications 1 à 6, **caractérisée en ce que** les proportions de P et d'AI dans la fibre sont sensiblement égales.

8. Fibre optique selon l'une des revendications 1 à 7, **caractérisée par** une couche barrière (4) entre la zone centrale et la zone périphérique.

9. Fibre optique selon la revendication 8, **caractérisée en ce que** la couche barrière est peu ou faiblement dopée.

10. Fibre optique selon l'une quelconque des revendications 1 à 9, **caractérisée en ce qu'**au moins une zone du coeur (1) est codopée par un dopant élévateur d'indice, tel que Ge.

11. Fibre optique selon la revendication 10, **caractérisée en ce que** la proportion de Ge dans le coeur de fibre est comprise entre 10 et 25 % en poids.

12. Méthode de fabrication d'une fibre optique selon l'une des revendications 1 à 11 comprenant l'étape de dépôt chimique en phase vapeur.

13. Un amplificateur à fibre optique comprenant une fibre selon l'une des revendications 1 à 11, et des moyens de pompage optique.

## Patentansprüche

1. Optische Faser, die einen Kern auf Siliziumoxid-Basis aufweist, mit mindestens einem fluoreszierenden Dotierungsstoff, der über den gesamten Querschnitt des Kerns (1) verteilt ist, wobei der genannte Kern einen mittleren Bereich (2), der gleichzeitig mit einem ersten zusätzlichen Dotierungsstoff, entweder Al oder P, dotiert ist, und einen Randbereich (3) enthält, der gleichzeitig mit einem anderen zusätzlichen Dotierungsstoff, entweder Al oder P, dotiert ist, der sich von dem ersten Dotierungsstoff unterscheidet, um einen Verstärkungsausgleich über ein Wellenlängenintervall zu erzielen, dass auch der Verstärkungsspitze entspricht.

2. Optische Faser gemäß Anspruch 1, **dadurch gekennzeichnet, dass** es sich bei dem fluoreszierenden Dotierungsstoff um Erbium handelt.

3. Optische Faser gemäß Anspruch 1 und 2, **dadurch gekennzeichnet, dass** es sich bei dem zusätzlichen Dotierungsstoff im mittleren Bereich (2) um Al handelt.

4. Optische Faser gemäß Anspruch 1 oder 2, **dadurch gekennzeichnet, dass** es sich bei dem zusätzlichen Dotierungsstoff im mittleren Bereich (2) um P handelt.

5. Optische Faser gemäß einem der Ansprüche 1 bis 4, **dadurch gekennzeichnet, dass** der Anteil an Al im Faserkern zwischen 1 und 5 Gewichtsprozent beträgt.

6. Optische Faser gemäß einem der Ansprüche 1 bis 5, **dadurch gekennzeichnet, dass** der Anteil an P im Faserkern zwischen 1 und 5 Gewichtsprozent beträgt.

7. Optische Faser gemäß einem der Ansprüche 1 bis 6, **dadurch gekennzeichnet, dass** die Anteile an P und Al in der Faser in etwa gleich sind.

8. Optische Faser gemäß einem der Ansprüche 1 bis 7, **dadurch gekennzeichnet, dass** zwischen dem mittleren Bereich und dem Randbereich eine Sperrschicht (4) vorhanden ist.

9. Optische Faser gemäß Anspruch 8, **dadurch gekennzeichnet, dass** die Sperrschicht kaum oder gering dotiert ist.

10. Optische Faser gemäß einem der Ansprüche 1 bis 9, **dadurch gekennzeichnet, dass** mindestens ein Bereich des Kerns (1) gleichzeitig mit einem Dotierungsstoff dotiert ist, der den Index erhöht, wie beispielsweise Ge.

11. Optische Faser gemäß Anspruch 10, **dadurch gekennzeichnet, dass** der Anteil an Ge im Faserkern zwischen 10 und 25 Gewichtsprozent beträgt.

12. Verfahren, zur Herstellung einer optischen Faser gemäß einem der Ansprüche 1 bis 11. (bestehend aus einem chemischen den Niederschlag in der Dampfphase Schritt).

13. Ein faseroptischer Verstärker, bestehend aus einer Faser gemäß einem der Ansprüche 1 bis 11 sowie optischen Pumpvorrichtungen.

## Claims

1. An optical fiber having a core based on silica with at least one fluorescent dopant distributed over the entire section of the core (1), said core comprising a central zone (2) co-doped with a first co-dopant chosen from Al and P, and a peripheral zone (3) co-doped with the other co-dopant chosen from Al and P and different from the first, so as to obtain gain equalization over a wavelength range also corresponding to the gain peak.

2. An optical fiber according to claim 1, **characterized in that** at least one fluorescent dopant is erbium.

3. An optical fiber according to claim 1 or 2, **characterized in that** the co-dopant of the central zone (2) is Al.

4. An optical fiber according to claim 1 or 2, **characterized in that** the co-dopant of the central zone (2) is P.

5. An optical fiber according to any one of claims 1 to 4, **characterized in that** the proportion of Al in the fiber core lies in the range 1% by weight to 5% by weight.

6. An optical fiber according to any one of claims 1 to 5, **characterized in that** the proportion of P in the fiber core lies in the range 1% by weight to 5% by weight.

7. An optical fiber according to any one of claims 1 to 6, **characterized in that** the proportions of P and of Al in the fiber are substantially equal.

8. An optical fiber according to any one of claims 1 to 7, **characterized by** a barrier layer (4) between the central zone and the peripheral zone.

9. An optical fiber according to claim 8, **characterized in that** the barrier layer is substantially not doped or is only lightly doped.

10. An optical fiber according to any one of claims 1 to 9, **characterized in that** at least one core zone (1) is co-doped with an index-increasing dopant such as Ge.

11. An optical fiber according to claim 10, **characterized in that** the proportion of Ge in the fiber core lies in the range 10% by weight to 25% by weight.

12. A method of manufacturing an optical fiber according to any one of claims 1 to 11, the method including the step of chemical vapor deposition.

13. An optical fiber amplifier comprising a fiber according to any one of claims 1 to 11, and optical pumping means.
